# EUROPÄISCHE PATENTSCHRIFT

(11) **EP 0 597 230 B1**
(45) Veröffentlichungstag und Bekanntmachung des Hinweises auf die Patenterteilung: **08.05.1996**
(21) Anmeldenummer: 93115669.9
(22) Anmeldetag: 29.09.1993
(51) Int. Cl.: C23C 24/08, C23C 24/10, C23C 24/00

(54) **Verfahren zur Herstellung rissfreier Verschleissschutzschichten auf metallischen Unterlagen**
Process for the preparation of crack-free and wear-resistant coatings on metallic substrates
Procédé pour la préparation de couches resistantes à l'usure et sans fissures sur des substrats métalliques

(30) Priorität: 10.11.1992 DE 4237891
(43) Veröffentlichungstag der Anmeldung: 18.05.1994
(73) Patentinhaber: Degussa Aktiengesellschaft, D-60311 Frankfurt (DE)
(72) Erfinder: Koschlig, Manfred, Dr., D-63743 Aschaffenburg (DE); Krappitz, Harald, Dr, D-63457 Hanau-Grossauheim (DE)

(56) Entgegenhaltungen:
- EP-A- 0 365 460
- DE-C- 3 801 958
- DE-U- 9 204 579
- PATENT ABSTRACTS OF JAPAN, unexamined applications, C Sektion, Band 12, Nr. 59, 23. Februar 1988 THE PATENT OFFICE JAPANESE GOVERNMENT Seite 116 C 478; & JP-A-62 205 291 (ASIA KOGYO K.K.)

## Beschreibung

Die Erfindung betrifft ein Verfahren zur Herstellung rißfreier Verschleißschutzschichten aus Hartstoffen auf metallischen Unterlagen durch flächendeckendes Aufbringen von flexiblen Formkörpersegmenten aus Kunststoff, in die Hartstoffe und Metallpulver eingebettet sind, und Erhitzen auf Temperaturen oberhalb der Liquidustemperatur des eingebetteten Metallpulvers.

Seit längerer Zeit befinden sich flexible Formkörper aus Kunststoffen, die Hartstoffe und Lotpulver enthalten, zum Beschichten von metallischen Unterlagen im Einsatz. Die Herstellung und der Aufbau dieser Formkörper wird beispielsweise in der DE-PS 38 01 958 beschrieben. Diese Formkörper werden auch zur Beschichtung großer Flächen (größer 60 x 60 mm) mit Schichtdicken zwischen 0,5 bis 6,0 mm eingesetzt. Die Hartstoff- bzw. Lotpulveranteile der Kunststofformkörper liegen zwischen 30 bis 80 Vol.-%. Allen Formkörpern ist eigen, daß zwischen 200^{o} C bis 600^{o} C, je nach eingesetztem Kunststoff, dieser Kunststoff nahezu rückstandsfrei ausbrennt und ein Pulverhaufwerk zurückbleibt, das je nach Hartstoffanteil und Art der Herstellung eine mechanische Verzahnung der in ihr enthaltenen Hartstoff- bzw. Lotteilchen untereinander aufweist.

Die Eigenfestigkeit dieser Schichten ist bis zur Erzeugung des fertigen Verbundes aber sehr gering und somit eine mechanische Belastung kaum möglich. Gleichzeitig weist die verbleibende Schicht einen nur geringen thermischen Ausdehnungskoeffizienten auf, der sich um mindestens Faktor 2 von dem des metallischen Grundkörpers unterscheidet. Erst nach dem Erhitzen auf Temperaturen oberhalb der Liquidustemperatur des Lotpulvers kommt es zu einem stabilen Verbund.

Bei der Beschichtung von metallischen Grundkörpern mit Kunststofformkörpern, die mehr als 40 Vol.-% Hartstoff- und Lotpulver enthalten, kommt es bei der Erwärmung auf Prozeßtemperaturen oberhalb von 950^{o} C zu Relativbewegungen zwischen der Beschichtung und dem metallischen Grundkörper. Die in der Regel großflächig ausgelegte Beschichtung gerät dadurch unter Zugspannung, die sie in ihrer Gesamtheit nicht ertragen kann. Die Folge sind unkontrollierte Rißbildungen mit Rißbreiten in Abhängigkeit von der Geometrie der Beschichtungsfläche von bis zu 2 mm. Risse mit einer Breite von mehr als 0,5 mm werden durch die Lotlegierung aufgrund des fehlenden kapillaren Fülldrucks nicht mehr vollständig aufgefüllt. Neben der dadurch geometrisch begründeten Kerbwirkung entstehen lokal starke Unterschiede in den mechanischen Eigenschaften, die durch den fehlenden Hartstoffanteil des Verbundes in den Rissen hervorgerufen werden, bzw. die Beschichtung weist Fehlstellen auf, die bei Teilen, die auf Paßmaße gearbeitet werden müssen, nicht akzeptiert werden können.

Zur Vermeidung einer solchen Rißbildung in der Hartstoffverschleißschicht wird im DE-GM 92 04 579 vorgeschlagen, die Hartstoffbeschichtung in segmentierte Teilflächen zu untergliedern und die Kunststoffsegmente quasi fugenlos aneinanderzureihen. Dabei sollen die Grenzen der Teilflächen gegeneinander versetzt angeordnet werden, damit sich nicht entlang den Grenzlinien der einzelnen Segmente Fugen als hartstofffreie durchgehende Erosionskanäle ergeben. Es hat sich allerdings gezeigt, daß mit diesen Maßnahmen die Rißbildung innerhalb der Segmente und eine Verbreiterung der Fugen während es Erhitzens nicht immer zuverlässig verhindert werden können.

Es war daher Aufgabe der vorliegenden Erfindung, ein Verfahren zur Herstellung rißfreier Verschleißschutzschichten aus Hartstoffen auf metallischen Unterlagen zu entwickeln, durch flächendeckendes Aufbringen von flexiblen Formkörpersegmenten aus Kunststoff, in die Hartstoffe und Metallpulver eingebettet sind, und Erhitzen auf Temperaturen oberhalb der Liquidustemperatur des eingesetzten Metallpulvers, wobei eine Rißbildung innerhalb der einzelnen Segmente zuverlässig verhindert und eine Fugenverbreiterung zwischen den Segmenten während des Erhitzungsvorgangs minimiert werden sollte.

Diese Aufgabe wird erfindungsgemäß dadurch gelöst, daß die Seitenflächen der einzelnen Segmente unter einem Winkel von 30 bis 60^{o} gegenüber der Segmentoberfläche abgeschrägt werden,
die aneinanderstoßenden Seitenflächen benachbarter Segmente unter Ausbildung einer möglichst schmalen Fuge parallel zueinander angeordnet werden und die Fugen über die gesamte Unterlage fortlaufend miteinander verbunden werden.

Vorzugsweise werden die Segmente quadratisch ausgebildet und weisen ein Kantenlänge von 20 bis 60 mm auf.

Werden die metallischen Unterlagen mit der Verschleißschutzschicht in einer Vorzugsrichtung beansprucht, so ist es vorteilhaft, wenn bei alleiniger Segmentierung längs der Vorzugsrichtung die Fugen der Segmente senkrecht zur Vorzugsrichtung und bei einer Segmentierung längs und quer zur Vorzugsrichtung die Fugen der Segmente unter einem Winkel von 30 bis 60^{o} gegenüber dieser Vorzugsrichtung angeordnet werden.

Die Aufbringung von Segmenten auf die Beschichtungsfläche führt zu rißfreien Beschichtungen, da die geringe Eigenfestigkeit der pulverförmigen Beschichtung die aus den Relativbewegungen während der Aufheizphase resultierenden Zugspannungen gerade noch ertragen kann, wenn die Segmente klein genug gewählt werden. Eine Segmentgröße von beispielsweise 50 x 50 mm hat sich bewährt. Es wird dabei ausgenutzt, daß die Unterschiede in der Längenausdehnung auf mehrere Fugen verteilt werden können, wodurch der einzelne absolute Betrag deutlich geringer ausfällt. So werden in der Regel nur noch Fugenverbreiterungen bis zu max. 0,2 mm beobachtet, die sich aufgrund des höheren Kapillardruckes gut mit Lot füllen.

Einen wichtigen Aspekt stellt bei großflächigen Beschichtungen die bevorzugte quadratische Grundform der Segmente dar.

Die ineinanderlaufenden Fugen ermöglichen Verschiebungen in zweidimensionaler Richtung, wie sie auch dem Wachstum des metallischen Grundkörpers während der Erwärmung entsprechen. Ein Verschieben der Segmente gegeneinander wird damit möglich. Die in der DE-GM 92 04 579 vorgeschlagene Segmentierung, die aus gegeneinander versetzt angeordneten, rechteckigen Segmenten besteht, führt gegebenenfalls durch die in den Knotenpunkten entstehenden Abscherspannungen zu einer unkontrollierten Rißbildung innerhalb der Segmente, was bei der erfindungsgemäßen Ausbildung von fortlaufenden Fugen verhindert wird.

Die Füllung der Fugen bzw. Spalte zwischen den einzelnen Segmenten wird vom kapillaren Fülldruck bestimmt. Je enger die Spaltbreite ausgeführt ist, desto besser ist der Füllgrad ausgebildet. Werden durch die Relativbewegung zwischen metallischem Grundkörper und Beschichtung die Segmente verschoben bzw. die Spalte geöffnet, so kann die bei einem Stumpfstoß entstehende Fugenbreite um z.B. 30 % verringert werden, wenn die Segmentseitenflächen unter einem Winkel von beispielsweise 45^{o} gegenüber der Segmentoberflache geneigt sind. Gleichzeitig wird sichergestellt, daß der metallische Grundkörper immer durch eine hartstoffhaltige Teilbeschichtung abgedeckt ist. Dies erhöht insbesondere bei einer Beanspruchung, die senkrecht auf die Beschichtung trifft, die Standzeit der Gesamtbeschichtung.

Parallel zur Hauptbeanspruchungsrichtung liegende Fugen sind bei gegeneinander arbeitenden Bauteilen einem höheren Verschleiß ausgesetzt.

Die eingesetzten Lotlegierungen stellen z.T. bereits Hartlegierungen dar, im Bereich des Spaltes fehlt jedoch der den hohen Verschleißwiderstand erbringende Hartstoffanteil. Es kommt zu "Auswaschungen" entlang der Fuge. Bevorzugt quer zur Beanspruchungsrichtung liegende Fugen zeigen eine geringe Abnutzung, da die hartstoffgefüllten Ufer des Spaltes eine stärkere Stützwirkung ausüben. Die Segmentierung mit quadratischen Segmenten wird in solchen Fällen derart gedreht, daß alle Fugen unter einem Winkel von 30 bis 60^{o} vorzugsweise 45^{o}, zur Hauptbeanspruchungsrichtung liegen. Im Falle einer kreisförmigen Beanspruchungsrichtung werden die Fugen abweichend vom quadratischen Grundraster radial entsprechend der Beanspruchungsrichtung angepaßt, wobei in radialer Richtung die Segmentgröße wieder auf 20 bis 60 mm begrenzt bleiben sollte. Sind die Teile schmaler als 60 mm, so daß eine Segmentierung in diese Richtung nicht notwendig ist, werden die Fugen vorteilhafterweise senkrecht zur Beanspruchungsrichtung angeordnet.

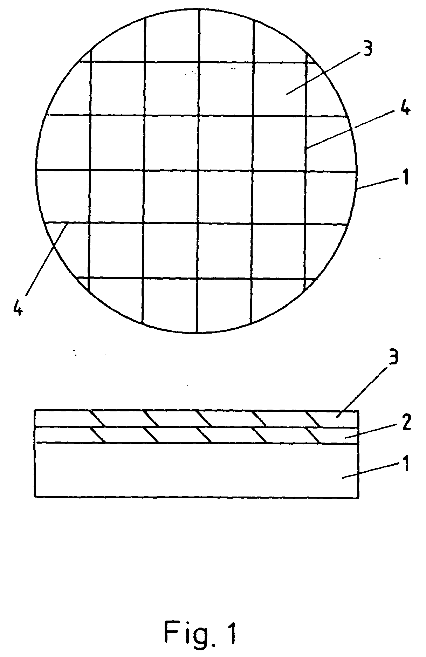

Die Figuren 1 bis 3 zeigen schematisch metallische Unterlagen mit aufgebrachten Segmenten eines Kunststoffs, der Hartstoffe und Lotpulver enthält, in beispielhafter Ausführungsform.

Fig. 1 zeigt einen Grundkörper (1) aus Stahl, der mit zwei Schichten von Segmenten (2, 3) aus Kunststoff belegt ist,
wobei die unteren Segmente (2) Hartstoffe und die oberen Segmente (3) Lotpulver enthalten. Die Seitenwände der quadratischen Segmente (2, 3) sind vorzugsweise um einen Winkel von 45^{o} abgeschrägt. Die Segmente (2, 3) werden so zusammengesetzt,
daß möglichst enge Fugen (4) entstehen. Dabei ist es selbstverständlich, daß die Segmente (2, 3) am Rand des Grundkörpers (1) dessen Gestalt und Größe angepasst sind. Die Fugen (4) sind in beiden Richtungen gradlinig miteinander verbunden.

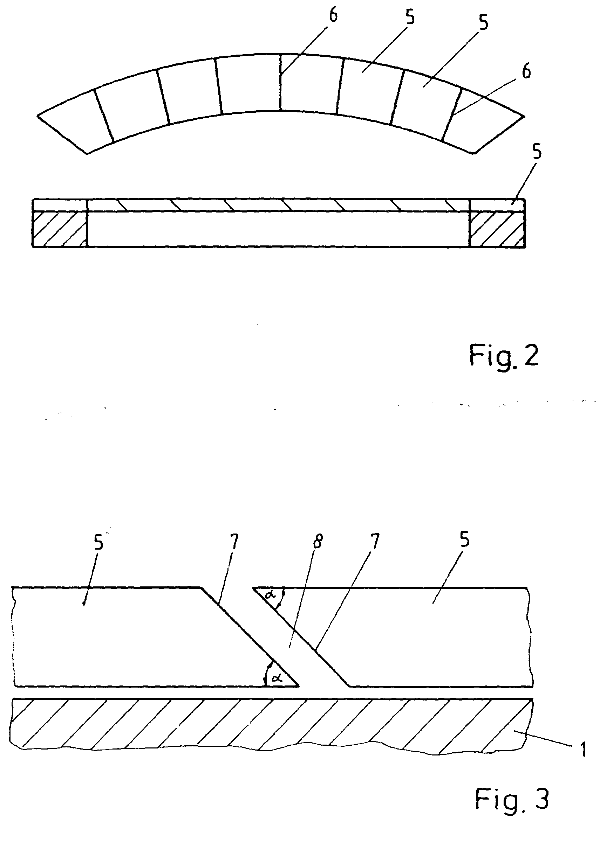

Die Figur 2 zeigt als Sonderfall ein Messersegment für Schneidtrommeln, bei dem die Kunststoffsegmente (5), die sowohl Hartstoffe als auch Lotpulver enthalten so angeordnet sind, daß die Fugen (6) senkrecht zur Vorzugsrichtung der Verschleißbeanspruchung ausgerichtet sind, da eine Segmentierung nur längs der Vorzugsrichtung erforderlich ist. Falls die Segmente (5) auch parallel zur Vorzugsrichtung unterteilt sind und eine Fuge senkrecht zur Fuge (6) entsteht, müssen diese Fugen unter einem Winkel von 30 bis 60^{o} gegenüber dieser Vorzugsrichtung angeordnet sein.

In Figur 3 wird die Stoßstelle zweier Kunststoffsegmente (5) vergrößert dargestellt. Die Seitenwände (7) der Segmente (5) sind um den Winkel α gegen die Segmentoberfläche abgeschrägt und parallel zueinander angeordnet, so daß sich eine möglichst enge Fuge (8) ausbildet.

Folgende Beispiele sollen das erfindungsgemäße Verfahren anhand der Figuren 1 und 2 näher erläutern:
1) Eine Prallplatte (1) aus Baustahl mit einem Außendurchmesser von 300 mm und einer Dicke von 30 mm wird mit Segmenten (2) aus einem Cr₃C₂-Pulver enthaltenden Kunststoffvlies belegt (Fig. 1). Die quadratischen Segmente haben eine Kantenlänge von 50 mm.
   Die Seitenflächen der Segmente (2) sind unter einem Winkel von 45^{o} zueinander passend geschnitten. Der Winkel der Fugen öffnet sich bei der Beschichtung grundsätzlich immer zur gleichen Seite. Die Außenkontur wird über einen einfachen Schneidvorgang erreicht, wobei die außen liegenden Segmente (2) entsprechend der Außenkontur verkleinert werden. Die Fugen (4) laufen im Schachbrettmuster an den Kreuzungspunkten ineinander über. Mit den Segmenten (3) des kunststoffgebundenen Lotvlieses wird ebenso verfahren. Sie können fugengleich, aber auch versetzt auf die Hartstoffvliessegmente (2) aufgelegt werden. Die Segmente (3) haben ebenfalls eine Kantenlänge von 50 mm. Nach dem Beschichten mit den Segmenten (2, 3) wird das Bauteil über die Schmelztemperatur des Lotes erwärmt, und die flüssige Schmelze verbindet stoffschlüssig die Karbide untereinander sowie mit dem metallischen Grundkörper, während der Kunststoffanteil restefrei entweicht.
2) Ein Messersegment für eine Schneidtrommel (Fig. 2) wird mit 2 mm dicken Segmenten (5) belegt, die aus einem WC-Pulver und Lotpulver enthaltenden Kunststoffformteil hergestellt werden.
   Die Segmente (5) haben in Umfangsrichtung senkrechte Schnittkanten, während die Segmentkanten zueinander in einem Winkel von 45^{o} ausgebildet sind. Die Fugen (6) laufen quer zur Hauptbeanspruchungsrichtung in ihrer Verlängerung im Mittelpunkt des die Außenkontur beschreibenden Kreises zusammen.

## Patentansprüche

1. Verfahren zur Herstellung rißfreier Verschleißschutzschichten aus Hartstoffen auf metallischen Unterlagen durch flächendeckendes Aufbringen von flexiblen Formkörpersegmenten aus Kunststoff, in die Hartstoffe und Metallpulver eingebettet sind, und Erhitzen auf Temperaturen oberhalb der Liquidustemperatur des eingebetteten Metallpulvers,
dadurch gekennzeichnet,
daß die Seitenflächen der einzelnen Segmente unter einem Winkel von 30 bis 60^{o} gegenüber der Segmentoberfläche abgeschrägt werden, die aneinanderstoßenden Seitenflächen benachbarter Segmente unter Ausbildung einer möglichst schmalen Fuge parallel zueinander angeordnet werden, und die Fugen über die gesamte Unterlage fortlaufend miteinander verbunden werden.

2. Verfahren nach Anspruch 1,
dadurch gekennzeichnet,
daß die Segmente (2,3,5) quadratisch ausgebildet werden und Kantenlängen von 20 bis 60 mm aufweisen.

3. Verfahren nach Anspruch 1 oder 2,
dadurch gekennzeichnet,
daß bei Verschleißschutzschichten mit einer Vorzugsrichtung der Verschleißbeanspruchung bei alleiniger Segmentierung längs der Vorzugsrichtung die Fugen der Segmente senkrecht zur Vorzugsrichtung und bei einer Segmentierung längs und quer zur Vorzugsrichtung die Fugen der Segmente unter einem Winkel von 30 bis 60^{o} gegenüber dieser Vorzugsrichtung angeordnet werden.

## Claims

1. Process for the preparation of crack-free and wear-resistant coatings of hard substances on metallic substrates by surface-covering application of flexible moulded body segments of plastics material, in which hard substances and metal powder are embedded, and heating to temperatures above the liquidus temperature of the embedded metal powder, characterized in that the lateral surfaces of the individual segments are inclined at an angle of 30 to 60° with respect to the segment surface, the adjoining lateral surfaces of adjacent segments are arranged parallel to one another with the formation of as narrow a joint as possible, and the joints are continuously joined together over the entire substrate.

2. Process according to Claim 1, characterized in that the segments (2, 3, 5) are configured to be square and have edge lengths of 20 to 60 mm.

3. Process according to Claim 1 or 2, characterized in that in the case of wear-resistant coatings with a preferred direction of the wear stress and with sole segmenting along the preferred direction the joints of the segments are arranged perpendicular to the preferred direction and with segmenting along and transverse to the preferred direction the joints of the segments are arranged at an angle of 30 to 60° with respect to this preferred direction.

## Revendications

1. Procédé de préparation de couches de protection contre l'usure en substances dures sur des substrats métalliques par application recouvrant la surface de segments de corps moulés flexibles en matière plastique, dans laquelle sont enrobées des substances dures et de la poudre métallique, et chauffage à des températures au-dessus de la température liquidus de la poudre métallique enrobée, caractérisé en ce que les faces latérales des segments individuels sont chanfreinées sous un angle de 30 à 60° par rapport à la surface du segment, les faces latérales contiguës de segments voisins sont disposées parallèlement l'une par rapport à l'autre en créant un joint le plus étroit possible, et les joints sont reliés ensemble de manière continue sur tout le substrat.

2. Procédé selon la revendication 1, caractérisé en ce que les segments (2, 3, 5) sont réalisés carrés et ont des longueurs de côté de 20 à 60 mm.

3. Procédé selon la revendication 1 ou 2, caractérisé en ce que dans le cas de couches de protection contre l'usure avec une direction préférentielle de la sollicitation d'usure et en cas d'une segmentation unique le long de la direction préférentielle les joints des segments sont disposés perpendiculairement à la direction préférentielle et en cas d'une segmentation le long et transversalement à la direction préférentielle les joints des segments sont disposés sous un angle de 30 à 60° par rapport à cette direction préférentielle.
